# EUROPEAN PATENT SPECIFICATION

(11) **EP 1 760 750 B1**
(45) Date of publication and mention of the grant of the patent: **04.11.2009**
(21) Application number: 06291406.4
(22) Date of filing: 06.09.2006
(51) Int. Cl.: H01J 9/02, B41M 1/10

(54) **Master mold for offset process and pattern formation method using the same**
Formmatrize für Offsetdruck und Verfahren zur Herstellung von Mustern
Matrice de moulage pour impression offset et procédé de formation de motifs

(30) Priority: 06.09.2005 KR 20050082620
(43) Date of publication of application: 07.03.2007
(73) Proprietor: LG Electronics, Inc., Seoul (KR)
(72) Inventor: Park, Dae Hyun, Yongin-si Gyeonggi-do (KR); Kim, Kyung Ku, Dongan-gu, Anyang-si Gyeonggi-do (KR); Seo, Byung Hwa, Gangnam-gu, Seoul (KR); Park, Min Soo, Seocho-gu Seoul (KR); Jeon, Won Seok, Jangan-gu Suwon-si Gyeonggi-do (KR); Shin, Dong Oh, Gyeonggi-do (KR); Park, Deok Hai, Daegu (KR); Lee, Hong Cheol, Seocho-gu Seoul (KR); Kim, Je Seok, Dongan-gu, Anyang-si Gyeonggi-do (KR); Ryu, Byung Gil, Seoul (KR)
(74) Representative: Cabinet Plasseraud

(56) References cited:
- EP-A- 1 536 447
- JP-A- 2000 040 462
- JP-A- 2005 166 636
- US-A1- 2004 110 321
- US-A1- 2005 017 639

## Description

### BACKGROUND OF THE INVENTION

### Field of the Invention

The present invention relates to an offset process as in claim 7, and more particularly, to a master mold for an offset process as in claim 1, enabling formation of electrodes with a complex pattern or a very-fine pattern and a pattern formation method using the master mold.

### Discussion of the Related Art

Plasma display panels are well known as an emissive device which displays an image using a discharge phenomenon. Such a plasma display panel is being highlighted as a display for an image display device having a large screen because the plasma display panel has many advantages of simple manufacture, large screen size, and rapid response speed in that it is unnecessary to provide active elements for respective cells.

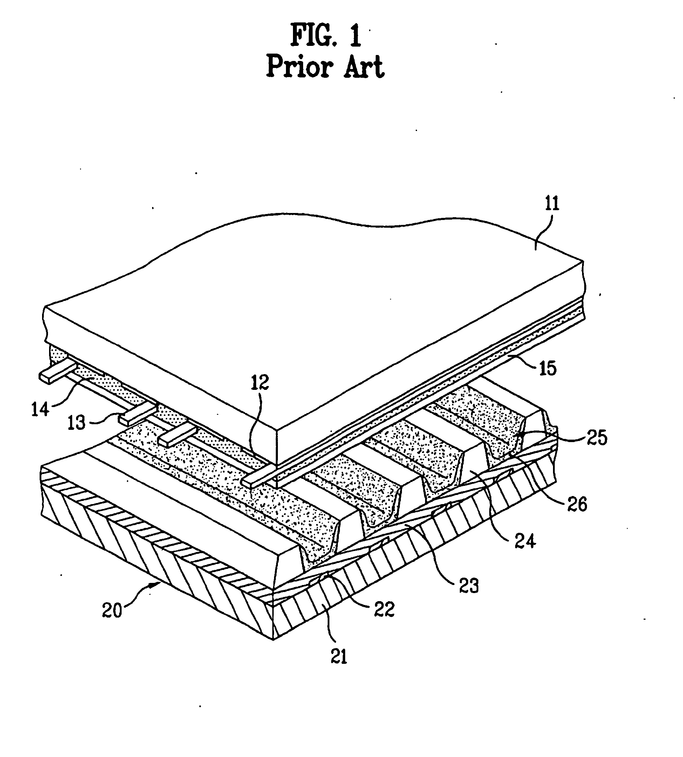

Referring to FIG. 1, a structure of such plasma display panel (PDP) is illustrated. As shown in FIG. 1, the PDP has a structure in which an upper panel 10 and a lower panel 20 are overlapped with each other such that they face each other. For each cell, the upper panel 10 includes a pair of sustain electrodes arranged on an inner surface of a transparent substrate 11. Typically, the sustain electrodes include a transparent electrode 12 and a bus electrode 13.

Such sustain electrodes are coated with a dielectric layer 14 for an AC driving operation. A protective film 15 is formed over the dielectric layer 14.

On the other hand, the lower panel 20 includes address electrodes 22 arranged on an inner surface of the lower panel 20 over a dielectric layer 21. An insulating layer 23 is formed over the address electrodes 22. Stripe-shaped barrier ribs 24 are formed on the insulating layer 23, to define discharge cell spaces. Red, blue, and green phosphor layers 26 are coated on the barrier ribs 24 in grooves each formed between the adjacent barrier ribs 24, to form sub-pixels, respectively.

Discharge cells 25 are defined by the barrier ribs 24 for respective sub-pixels. Discharge gas is sealed in each discharge cell 25. The above-mentioned three different sub-pixels constitute one pixel.

Typically, the formation of the electrodes, in particular, the bus electrodes 13, is achieved in accordance with a method using an electrode paste or a dry film method using a green sheet.

In the method, which uses an electrode paste, a black matrix paste is coated over the overall portion of the upper substrate 11 included in the upper panel 10 in accordance with a printing process such that the black matrix paste covers the transparent electrodes 12 on the upper panel 10. The resulting black matrix layer is then dried.

Thereafter, the dried black matrix layer is subjected to a light exposure process using a black matrix mask. An electrode paste is then coated on the light-exposed black matrix layer, using a printing process, in the same manner as the formation of the black matrix layer, to form an electrode layer for the bus electrodes 13. The resulting electrode layer is then dried.

Subsequently, the dried electrode layer is subjected to a light exposure process using an electrode mask. The light-exposed electrode layer is then developed using a developing solution, so that the electrode layer is patterned. The patterned electrode layer is finally baked. Thus, the formation of the bus electrodes 13 is completed.

In the method using pastes, as described above, however, it is necessary to use a printer and printing masks

for the printing and drying processes. Furthermore, the drying process causes waste of time and requirement of a separate space.

In addition, half or more of the electrode material coated in the printing process is removed in the developing process. For this reason, there is a drawback of large waste of the material, and thus, an increase in the manufacturing costs.

In order to overcome the above-mentioned problems, an electrode formation method using an offset process has recently been used, as described in US 2004/0110321 A1.

When the offset process is applied to formation of electrodes, it is carried out as follows.

First, an electrode ink 32 is applied to a master mold 30 having an intaglio pattern 31 such that the electrode ink 32 is filled in the intaglio pattern 31. The electrode ink 32 patterned by the intaglio pattern 31 in the master mold 30 is then transferred to a blanket 40.

The blanket 40 includes a roller 41 made of a metal material, and a sheath made of a silicon material. The blanket 40 has a circumferential length identical to the length of the master mold 30.

Thereafter, the electrode ink 32 transferred to the blanket 40 is re-transferred to the substrate 11 of the upper panel in the PDP, and is then baked. Thus, the formation of the bus electrodes 13 is completed.

Where the electrode pattern to be formed on the substrate includes transversal electrode pattern portions extending in a direction perpendicular to the longitudinal direction of the pattern, to be transferred, corresponding to a transfer direction of the pattern, however, the offset process may incur problems in the procedure of transferring such transversal electrode pattern portions from the master mold to the blanket.

That is, the electrode pattern may be transferred in the form of an incomplete structure having, for example, collapsed corners or an undesirable thickness. In particular, such problems should be overcome in association with the formation of electrodes on an upper panel having no transparent electrode because the upper panel must have a transversal electrode structure extending perpendicular to the electrode pattern.

### SUMMARY OF THE INVENTION

Accordingly, the present invention is directed to a master mold for an offset process and a pattern formation method using the same that substantially obviate one or more problems due to limitations and disadvantages of the related art.

An object of the present invention is to provide a master mold for an offset process which includes a surface inclined from a vertical plane in a depth direction of the master mold, thereby being capable of achieving easy transfer of a pattern material from the master mold to a blanket without distortion of a pattern to be transferred, and enabling formation of electrodes with a complex pattern or a very-fine pattern, and to provide a pattern formation method using the master mold.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a master mold for an offset process for transferring a material to be transferred, using a blanket, comprises: a plate having a predetermined thickness; and an intaglio pattern formed in a surface of the plate, wherein the intaglio pattern has a surface inclined in a transfer direction of the material.

The intaglio pattern may comprise a first pattern extending in the transfer direction of the material, and a second pattern connected to the first pattern while extending perpendicular to the first pattern.

The intaglio pattern may be adapted to form an electrode. In particular, the intaglio pattern may be adapted to form a bus electrode of a plasma display panel. In particular, the second pattern may be effectively applied to the case of a panel including bus electrodes alone, without including transparent electrodes.

The second pattern may have an end surface inclined from a vertical plane at a leading end of the second pattern where the transfer of the material by the blanket is begun or at a trailing end of the second pattern where the transfer of the material by the blanket is ended. Alternatively, the second pattern may have end surfaces respectively inclined from a vertical plane at the leading end of the second pattern and the trailing end of the second pattern, in order to achieve more reliable and complete transfer of the material.

The inclination of the intaglio pattern may be carried out in a direction that the second pattern is reduced in width as the second pattern extends in a depth direction. In accordance with this structure, it is possible to achieve more easy transfer of the material. Also, the structure finally formed on the panel in accordance with the transfer of the material can have a stable shape.

In another aspect of the present invention, a master mold for an offset process comprises: a plate; and an intaglio pattern formed in the plate such that the intaglio pattern has an area reduced as the intaglio pattern extends inwardly.

The intaglio pattern may comprise a first pattern extending in a transfer direction of a pattern ink filled in the intaglio pattern, and a second pattern connected to the first pattern while extending perpendicular to the first pattern.

The second pattern may have an end surface inclined from a vertical plane at at least one of a leading end of the second pattern where the transfer of the pattern ink is begun and a trailing end of the second pattern where the transfer of the pattern ink is ended.

In another aspect of the present invention, a pattern formation method for a display device using an offset process comprises: forming a pattern extending perpendicular to a direction that the offset process is advanced, using a master mold including an intaglio pattern having a cross-section with a surface inclined in the advance direction of the offset process.

In another aspect of the present invention, a pattern formation method using the master mold comprises: applying a pattern ink to the master mold such that the pattern ink is filled in the intaglio pattern; transferring the pattern ink filled in the master mold in a patterned state to a blanket; and re-transferring the pattern ink from the blanket to a substrate.

The pattern formation method may further comprise baking the pattern-transferred substrate after the re-transferring step.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a perspective view illustrating a general plasma display panel;

FIG. 2 is a schematic view illustrating a transfer procedure in a conventional offset process;

FIG. 3 is a schematic view illustrating a retransfer procedure in the conventional offset process;

FIG. 4 is a plan view illustrating a master mold for an offset process according to the present invention;

FIG. 5 is a schematic view illustrating an example of a transfer procedure carried out using a master mold according to an embodiment of the present invention;

FIG. 6 is a schematic view illustrating an example of a transfer procedure carried out using a master mold according to another embodiment of the present invention; and

FIG. 7 is a plan view illustrating a master mold for an offset process according to another embodiment of the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

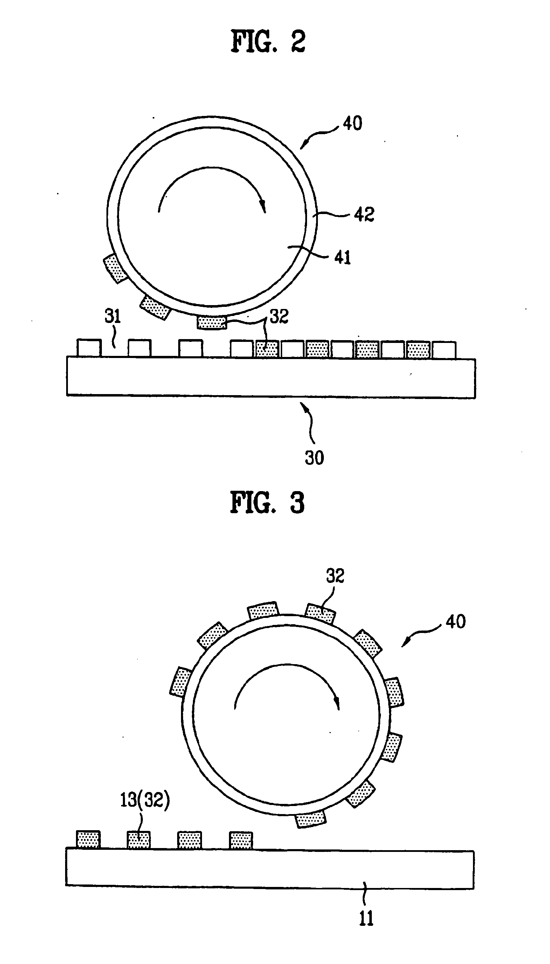

Referring to FIG. 3, a master mold 100 according to the present invention is illustrated. The master mold 100 includes a plate 100, and at least one intaglio pattern 120 formed in the plate 110. In the illustrated case, three intaglio patterns 120 are shown. For the simplicity of description, the following description will be given only in conjunction with one intaglio pattern 120.

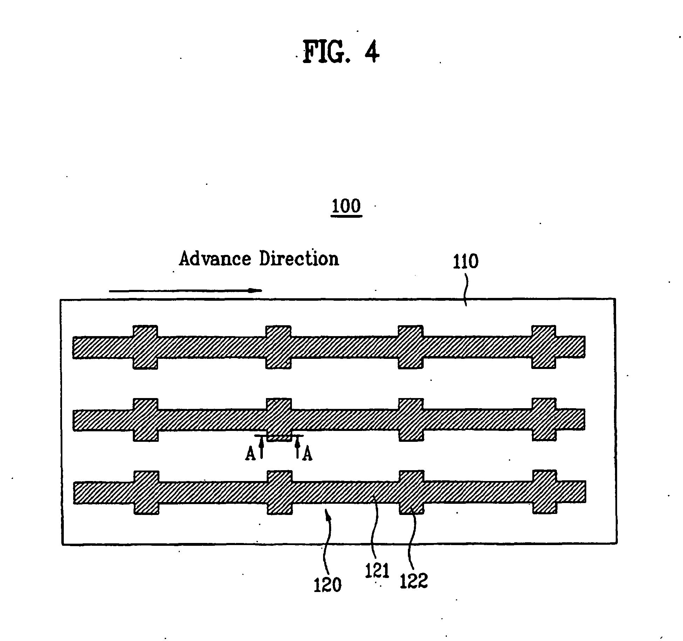

The intaglio pattern 120 may have a single pattern structure, or may have a multi-pattern structure as shown in FIG. 4. In the case of FIG. 4, the intaglio pattern 120 includes a first pattern 121 and a second pattern 122.

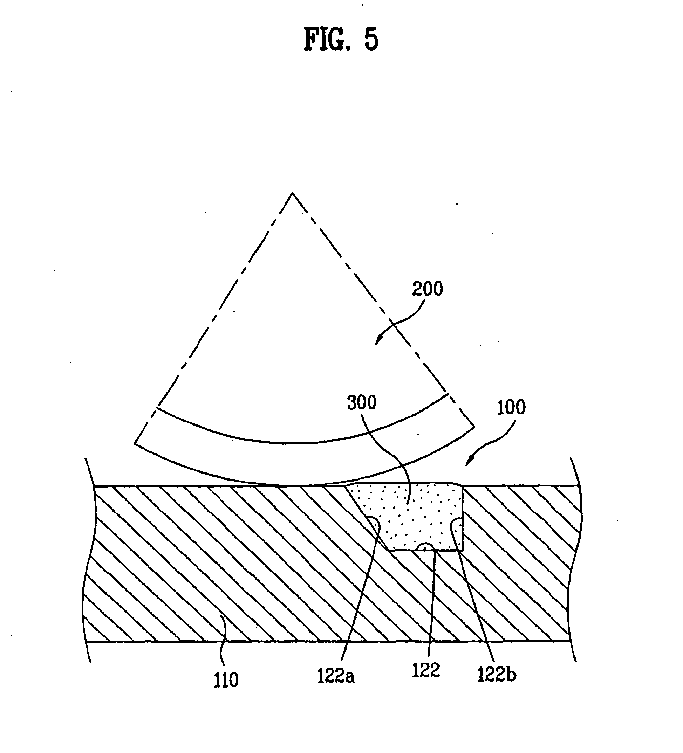

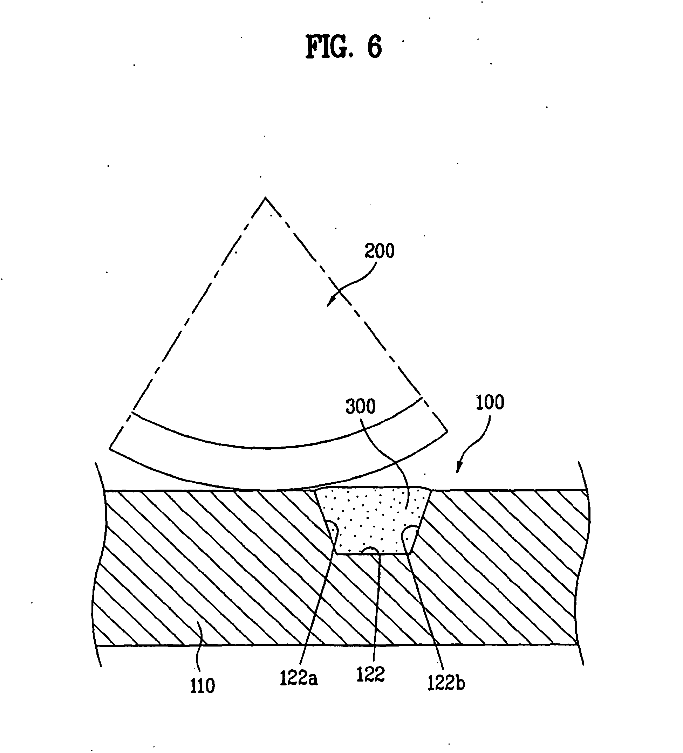

A pattern ink 300 (FIG. 5 or 6) as a material for pattern formation may be injected into the intaglio pattern 120 such that the pattern ink 300 is filled in the intaglio pattern 120. For the pattern ink 300, various kinds of pattern inks may be used in accordance with the material of the pattern to be formed.

That is, an electrode ink for formation of electrodes on a panel, a black ink for formation of a black matrix on a panel, or other various inks for other purposes may be used.

A blanket 200 is used to transfer the pattern ink 300 filled in the intaglio pattern 120.

For the transfer of the pattern ink 300, the blanket 200 is moved on and along the master mold 100, to which the pattern ink 300 has been applied. In accordance with the movement of the blanket 200, the pattern ink 300 filled in the intaglio pattern 120 is transferred to the blanket 200 while maintaining the patterned shape thereof.

The intaglio pattern 120 may have a surface inclined from a vertical plane at at least one of a leading end 122a thereof where the transfer of the pattern ink 200 is begun, and a trailing end 122b thereof where the transfer of the pattern ink 200 is ended.

By virtue of the inclined surface, the transfer of the pattern ink 300 can be easily achieved. In particular, such an inclined surface can provide an advantage when it is applied to pattern portions extending perpendicular to the movement direction of the blanket 200, for example, the second pattern 122.

The transferred pattern ink 300 is then re-transferred to an object to be formed with a corresponding pattern, such as a substrate, using the blanket 200 carrying the transferred pattern ink 300. Thus, a desired pattern formation is completed.

Hereinafter, the master mold 100 will be described in more detail, with reference to FIGs. 4 to 6, in conjunction with the case in which the master mold 100 is used to form an electrode pattern.

As shown in FIG. 4, the intaglio pattern 120, which is adapted for formation of electrodes, includes a first pattern 121 and a second pattern 122.

The first pattern 121 extends in a direction that the blanket 200 (FIG. 5 or 6) moves to transfer the pattern ink 300 filled in the intaglio pattern 120.

That is, the electrode pattern portion formed by the first pattern 121 forms a main portion of an electrode to be formed.

The second pattern 122 is a pattern portion of the intaglio pattern 120 connected to the first pattern 121 while extending perpendicular to the first pattern 121.

As shown in FIG. 4, the second pattern 122 extends perpendicularly from the first pattern 121 which is a main pattern portion of the intaglio pattern 120 on the master mold 100. This second pattern 122 may provide an advantage in forming bus electrodes alone, without formation of transparent electrodes.

FIGs. 5 and 6 illustrate a procedure for transferring the pattern ink 300 filled in the master mold 100 to the blanket 200. Referring to FIG. 5 or 6, the second pattern 122 of the intaglio pattern 120 on the master mold 100 has a cross-section having an end surface or end surfaces inclined from a vertical plane.

FIGs. 5 and 6 are cross-sectional views taken along the line A - A of FIG. 4. Referring to FIG. 5 or 6, the second pattern 122 is intaglioed to have a cross-section having a width gradually reduced in a depth direction, and thus, having an end surface or end surfaces inclined from a vertical plane.

The second pattern 122 of the master mold 100 may have a symmetrical cross-section or an asymmetrical cross-section, as shown in FIG. 5 or 6.

That is, the second pattern 122 may be inclined only at one end surface thereof, as shown in FIG. 5, or may be inclined at both the opposite end surfaces thereof, as shown in FIG. 6.

Referring to FIG. 5, the second pattern 122 has an inclined leading end 122a where the transfer of the pattern ink 300 filled in the second pattern 122 to the blanket 200 is begun, and a vertical trailing end 122b where the transfer of the filled pattern ink 300 is ended.

Conversely, the leading end 122a of the second pattern 122 may extend vertically, and the trailing end 122b of the second pattern 122 may extend inclinedly.

Alternatively, both the leading and trailing ends 122a and 122b of the second pattern 122 may be formed to extend inclinedly.

The inclination direction of the second pattern 122 corresponds to a direction that the second pattern 122 is reduced in width as it extends in a depth direction thereof.

The structures of FIGs. 5 and 6 are desirable in that they enable more reliable and smooth transfer of the pattern ink 300 from the second pattern 122 of the master mold 100 to the blanket 200.

That is, in accordance with the structures of FIGS. 5 and 6, it is possible to easily achieve the transfer of the pattern ink 300 filled in the second pattern 122 to the blanket 200 by virtue of the inclined portion of the second pattern 122, namely, the leading end 122a or trailing end 122b of the second pattern 122.

If necessary, the first pattern 121 may be formed to have portions inclined in a direction that the transfer of the pattern ink filled in the first pattern 121 is advanced. In this case, it is possible to achieve an improvement in the printing quality obtained when the offset process is used.

Thereafter, the pattern ink 300 transferred to the blanket 200 in the above-described manner is transferred to an object to be formed with an electrode pattern, for example, a substrate.

That is, the pattern ink 300 transferred from the second pattern 122 to the blanket 200, as shown in FIGs. 5 and 6, is re-transferred to a substrate (FIG. 3).

Thus, an electrode is formed on the substrate by the re-transferred pattern ink 300. In this case, the formed electrode has a trapezoidal structure having a width gradually reduced as the structure extends upwardly, because the intaglio pattern 120 has an inclined structure. That is, the formed electrode has a stable structure inverted from the structure of the second pattern 122.

Since the pattern having a trapezoidal structure as described above is more stable, it is possible to prevent the pattern from being peeled off or damaged in subsequent processes.

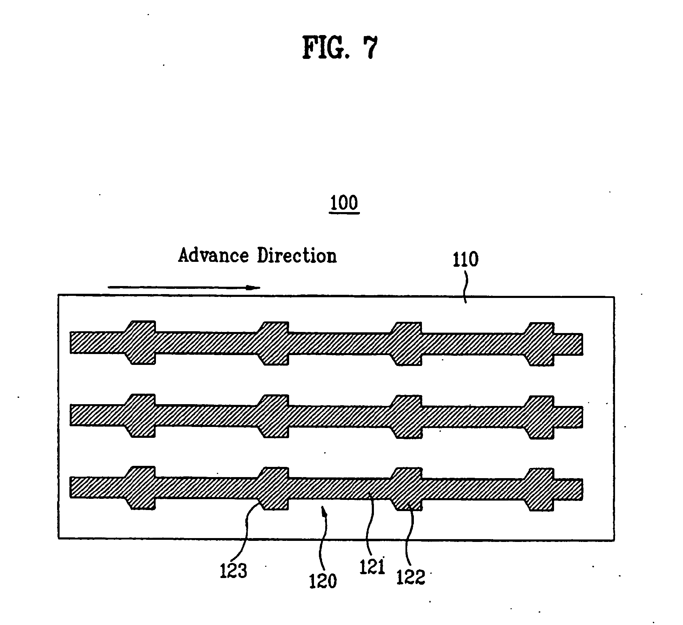

Meanwhile, the intaglio pattern 120 of the master mold 100 may have a structure as shown in FIG. 7.

The intaglio pattern 120 shown in FIG. 7 is similar to those of the above-described embodiments in that the intaglio pattern 120 includes a first pattern 121 adapted to form a main portion of an electrode to be formed, and a second pattern 122 connected to the first pattern 121.

In accordance with this embodiment, the second pattern 122 has a portion 123 inclined when viewing from the upper side of the master mold 100, as shown in FIG. 7.

The inclined portion 123 functions to enable easy transfer of the pattern ink 300 in the transfer procedure carried out using the blanket 200.

In addition to the inclined portion 123, the intaglio pattern 120 may have an end surface inclined from a vertical plane in the advance direction of the blanket 200 at the leading end 122a or trailing end 122b of the intaglio pattern 120.

In other words, the intaglio pattern 120 may have only the inclined portion 123 formed at the second pattern 122. Alternatively, the intaglio pattern 120 includes an end surface inclined from a vertical plane at the leading end 122a or trailing end 122b, in addition to the inclined portion 123. In this case, the second pattern 122 is more advantageous in the transfer procedure carried out by the blanket 200.

Thus, in accordance with the present invention, it is possible to form an electrode having a structure causing no adverse affect on the characteristics of the panel while being more stable.

The pattern formed in accordance with the above-described procedure is subsequently baked to be hardened. In particular, where the pattern is adapted to form electrodes of a plasma display panel, the hardening of the pattern may be carried out through a procedure for baking the overall portion of the upper substrate or lower substrate of the plasma display panel.

Although the master mold 100 has been described as being applied to formation of electrodes of a plasma display panel using an offset process, it may be applied to other procedures using an offset process.

That is, the present invention can be applied to patterning of various layers to be formed on a panel, or to form various structures to be formed on a panel.

It will be apparent to those skilled in the art that various modifications and variations can be made in the present invention without departing from the scope of the invention.

## Claims

1. A master mold (100) for an offset process enabling formation of electrodes of a plasma display panel, comprising:
a plate (110) having a predetermined thickness; and
an intaglio pattern (120) formed in a surface of the plate (110), which includes a first pattern (121) forming the main portion of an electrode to be formed, a second pattern (122) connected to the first pattern (121), the second pattern (122) extending perpendicular to the first pattern (121),
wherein the second pattern (122) has an asymmetrical cross-section.

2. The master mold (100) according to claim 1, wherein the second pattern (122) has an end surface (122a) inclined from a vertical plane.

3. The master mold (100) according to claim 1, wherein the second pattern (122)has end surfaces (122a, 122b) respectively inclined from a vertical plane.

4. The master mold (100) according to claim 1, wherein the second pattern (122) is intaglioed to have a cross-section having a width gradually reduced in a depth direction..

5. The master mold (100) according to any of the preceding claims, wherein the electrode is a bus electrode of a plasma display panel.

6. The master mold (100) according to any of the preceding claims, wherein the plate has a length not less than a circumferential length of a blanket.

7. A pattern formation method for a display device using an offset process, comprising:
forming electrodes extending perpendicular to a direction that the offset process is advanced, using a master mold (100) according to any of the preceding claims.

8. A pattern formation method using the master mold according to claim 1, comprising:
applying a pattern ink (300) to the master mold (100) such that the pattern ink (300) is filled in the intaglio pattern (120);
transferring the pattern ink (300) filled in the master mold (100) in a patterned state to a blanket (200); and
re-transferring the pattern ink (300) from the blanket (200) to a substrate.

9. The pattern formation method according to claim 8, further comprising:
baking the pattern-transferred substrate after the re-transferring step.

## Patentansprüche

1. Formmatrize (100) für einen Offsetprozeß, der die Bildung von Elektroden eines Plasmabildschirms ermöglicht, mit:
einer Platte (110) mit einer vorbestimmten Dicke; und
einer in einer Oberfläche der Platte (110) gebildeten vertieften Struktur (120), die eine erste Struktur (121), die den Hauptabschnitt einer zu bildenden Elektrode bildet, und eine mit der ersten Struktur (121) verbundene zweite Struktur (122) aufweist, wobei sich die zweite Struktur (122) senkrecht zur ersten Struktur (121) erstreckt,
wobei die zweite Struktur (122) einen asymmetrischen Querschnitt hat.

2. Formmatrize (100) nach Anspruch 1, wobei die zweite Struktur (122) eine Endfläche (122a) hat, die gegenüber einer senkrechten Ebene geneigt ist.

3. Formmatrize (100) nach Anspruch 1, wobei die zweite Struktur (122) Endflächen (122a, 122b) hat, die jeweils gegenüber einer senkrechten Ebene geneigt sind.

4. Formmatrize (100) nach Anspruch 1, wobei die zweite Struktur (122) so vertieft ist, daß sie einen Querschnitt mit einer Breite hat, die sich in Tiefenrichtung allmählich verkleinert.

5. Formmatrize (100) nach einem der vorstehenden Ansprüche, wobei die Elektrode eine Buselektrode eines Plasmabildschirms ist.

6. Formmatrize (100) nach einem der vorstehenden Ansprüche, wobei die Platte eine Länge hat, die nicht kleiner als eine Umfangslänge eines Drucktuchs ist.

7. Strukturbildungsverfahren für eine Anzeigevorrichtung mit Hilfe eines Offsetprozesses mit:
Bilden von Elektroden, die sich senkrecht zu einer Richtung erstrecken, in der der Offsetprozeß fortschreitet, mit Hilfe einer Formmatrize (100) nach einem der vorstehenden Ansprüche.

8. Strukturbildungsverfahren mit Hilfe der Formmatrize nach Anspruch 1 mit:
Auftragen einer Strukturdruckfarbe (300) auf die Formmatrize (100), so daß die Strukturdruckfarbe (300) in die vertiefte Struktur (120) gefüllt wird;
Übertragen der in die Druckmatrize (100) gefüllten Strukturdruckfarbe (300) in einem strukturierten Zustand auf ein Drucktuch (200); und
erneutes Übertragen der Strukturdruckfarbe (300) vom Drucktuch (200) auf ein Substrat.

9. Strukturbildungsverfahren nach Anspruch 8, ferner mit:
Wärmebehandeln des Substrats mit der übertragenen Struktur nach dem erneuten Übertragungsschritt.

## Revendications

1. Matrice de moulage (100) pour une impression offset permettant la formation des électrodes d'un panneau d'affichage au plasma, comprenant :
une plaque (110) ayant une épaisseur prédéterminée ; et
un motif en creux (120) formé dans une surface de la plaque (110), qui comprend un premier motif (121) formant la partie principale d'une électrode à former, un deuxième motif (122) relié au premier motif (121), le deuxième motif (122) s'étendant perpendiculairement au premier motif (121),
dans laquelle le deuxième motif (122) a une section transversale asymétrique.

2. Matrice de moulage (100) selon la revendication 1, dans laquelle le deuxième motif (122) comporte une surface d'extrémité (122a) inclinée par rapport à un plan vertical.

3. Matrice de moulage (100) selon la revendication 1, dans laquelle le deuxième motif (122) comporte des surfaces d'extrémité (122a, 122b) respectivement inclinées par rapport à un plan vertical.

4. Matrice de moulage (100) selon la revendication 1, dans laquelle le deuxième motif (122) est réalisé en creux de manière à avoir une section transversale ayant une largeur qui diminue graduellement dans une direction de profondeur.

5. Matrice de moulage (100) selon l'une quelconque des revendications précédentes, dans laquelle l'électrode est une électrode de bus d'un panneau d'affichage au plasma.

6. Matrice de moulage (100) selon l'une quelconque des revendications précédentes, dans laquelle la plaque a une longueur qui n'est pas inférieure à une longueur circonférentielle d'un blanchet.

7. Procédé de formation d'un motif pour un dispositif d'affichage utilisant une impression offset, comprenant l'étape consistant à :
former des électrodes s'étendant perpendiculairement à une direction d'avance de l'impression offset, en utilisant une matrice de moulage (100) selon l'une quelconque des revendications précédentes.

8. Procédé de formation d'un motif utilisant une matrice de moulage selon la revendication 1, comprenant les étapes consistant à :
appliquer une encre de motif (300) à la matrice de moulage (100) de sorte que l'encre de motif (300) soit introduite dans le motif en creux (120) ;
transférer l'encre de motif (300) introduite dans la matrice de moulage (100) dans un état à motif à un blanchet (200) ; et
retransférer l'encre de motif (300) du blanchet (200) à un substrat.

9. Procédé de formation de motif selon la revendication 8, comprenant en outre l'étape consistant à :
cuire le substrat auquel le motif a été transféré après l'étape de retransfert.
